# FASCICULE DE BREVET EUROPEEN

(11) **EP 0 499 085 B1**
(45) Date de publication et mention de la délivrance du brevet: **20.07.1994**
(21) Numéro de dépôt: 92101376.9
(22) Date de dépôt: 28.01.1992
(51) Int. Cl.: B24B 5/36

(54) **Rectification des pneumatiques**
Schleifen von Reifen
Tyre grinding

(30) Priorité: 06.02.1991 FR 9101418
(43) Date de publication de la demande: 19.08.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Billières, Jean, F-63100 Clermont-Ferrand (FR); Cabestrero, Abelardo, E-04001 Almeria (ES)
(74) Mandataire: Bauvir, Jacques

(56) Documents cités:
- WO-A-88/03866
- DE-A- 3 934 676
- FR-A- 2 360 066
- US-A- 3 905 160

## Description

La présente invention concerne la rectification des pneumatiques. L'invention propose un procédé de rectification des pneumatiques neufs ou usagés, et propose une machine de rectification sur véhicule d'un pneumatique ayant déjà roulé.

Les opérations de rectification des pneumatiques sont bien connues, et décrites par exemple par les brevets US-A-3 943 806, US-A-4 936 054 ou US-A-3 905 160, formant la base pour le préambule des revendications 1 et 6. La finalité de l'opération de rectification telle qu'elle est connue de l'état de la technique est d'améliorer, ou de restaurer une certaine perfection de forme au pneumatique pour améliorer son uniformité : on cherche donc à diminuer la variation radiale, ou le balourd.

Le but de la présente invention est d'éviter l'aggravation exponentielle de la vitesse d'usure lorsqu'apparaissent des amorces d'usure anormale ou de diminuer la vitesse d'usure lorsque le pneumatique comporte des défauts de moulage. A cette fin, l'invention propose de rectifier le pneumatique en respectant les harmoniques basses du faux rond de celui-ci (jusqu'à environ l'harmonique 2).

Partant de la constatation que la vitesse d'usure d'un pneumatique n'est pas toujours linéaire, il a été observé que certains types d'usure irrégulière pouvaient conduire à une accélération rapide de la vitesse d'usure. L'objectif de l'invention est donc d'effectuer sur le pneumatique une opération d'entretien consistant à effacer les amorces d'usure irrégulière aussitôt qu'elles sont détectées, ou bien une opération de finition, permettant d'en améliorer la qualité géométrique.

Selon l'invention, le procédé de rectification d'un pneumatique monté sur jante et gonflé à sa pression nominale, entraîné en rotation, et sur lequel agit un moyen de meulage, est caractérisé en ce que l'on applique le moyen de meulage sur la bande de roulement avec une pression faible et constante pendant plusieurs tours du pneumatique, et en ce que l'on enlève par abrasion une épaisseur de caoutchouc constante en moyenne circonférentiellement.

L'utilisation de l'invention est tout particulièrement intéressante pour les pneumatiques ayant été en service sur un véhicule, sur lesquels apparaissent des usures irrégulières. Il convient de rectifier les pneumatiques aussitôt que possible, dès l'amorce des usures irrégulières. On a constaté qu'il suffit d'enlever une très faible épaisseur de caoutchouc, de l'ordre de quelques dixièmes de millimètres pour maintenir la vitesse d'usure à son minimum, et au total améliorer la longévité kilométrique du pneumatique jusqu'à parfois la doubler. Par exemple, l'épaisseur maximale typique enlevée sur les pneumatiques neufs est comprise entre 2/10 de mm et 4/10 de mm. Pour les pneumatiques usagés, cette épaisseur est bien entendu conditionnée par l'amplitude des usures irrégulières déjà apparues. Cela peut varier de quelques dixièmes (par exemple 5/10 de mm) jusqu'à deux ou trois mm, et dans ce dernier cas, il est à nouveau possible d'utiliser un pneumatique qui était devenu inutilisable avant l'opération de rectification, vu l'importance des usures irrégulières qui provoquent alors des vibrations importantes, voire des défauts de comportement du véhicule.

Afin de faciliter autant que possible cette opération, l'invention propose aussi une machine de rectification qui puisse recevoir le pneumatique à traiter alors que celui-ci reste monté sur le véhicule, machine qui puisse donc recevoir le pneumatique un peu à la manière des bancs de freinage.

La machine selon l'invention comporte une bande abrasive susceptible d'être mise en mouvement, des moyens permettant d'appliquer la bande abrasive sur le pneumatique avec une force d'appui faible et rigoureusement constante pendant toute la rotation du pneumatique, des moyens permettant d'entraîner le pneumatique en rotation, et elle est destinée à être utilisée avec un cric permettant de délester le pneumatique de la totalité de la charge du véhicule qu'il reprend normalement. Bien entendu, le cric peut être incorporé à la machine.

Les figures jointes donnent une représentation schématique d'une machine permettant d'expliciter l'invention, appliquée de façon non limitative à la rectification des pneumatiques usagés.

La figure 1 montre un véhicule, vu de côté, en position sur une machine selon l'invention.

La figure 2 montre un véhicule, vu de face, en position sur une variante d'une machine selon l'invention.

La machine proposée est donc conçue pour que l'opération de rectification du pneumatique puisse être effectuée dans n'importe quel atelier de maintenance des véhicules du type Poids-Lourds, principalement concernés par l'invention. La machine proposée peut être incorporée dans le sol de l'atelier, par exemple dans une fosse. Ou bien la machine peut être disposée dans une armature autonome qui l'enveloppe, à poser sur le sol de l'atelier, le véhicule accédant au poste de rectification du pneumatique par une rampe.

Le pneumatique reste sur le véhicule et il suffit au préalable d'ajuster la pression de gonflage à la valeur nominale. Le chauffeur avance son véhicule 1 jusqu'à ce que le pneumatique 2 arrive en regard d'une trappe 30, réalisée ici dans le sol 3 de l'atelier. Un premier réglage grossier de l'attitude du pneumatique par rapport à la machine est fait par le pilote lui-même, qui veille notamment à ce que le pneumatique 2 ait un braquage nul lorsqu'il se trouve sur la trappe 30. Si nécessaire, tous les réglages fins voulus peuvent être incorporés à la machine. Ils ne sont pas représentés ni détaillés pour ne pas surcharger les figures avec des détails qui sont manifestement à la portée de l'homme du métier, et ne font pas partie de l'invention.

On aperçoit un bâti 4 articulé autour d'un axe 40 scellé par ailleurs dans le sol 3 supportant le véhicule 1, ou plus généralement solidaire du plan de référence supportant le véhicule 1. Une poulie 41 est montée à rotation libre autour d'un second axe 42 scellé lui aussi dans le sol 3 supportant le véhicule 1, juste en avant du bâti 4, à l'extrêmité opposée de l'axe d'articulation 40 de celui-ci. Un câble 43 est attaché à une patte 44 fixée à rotation libre sur le bâti 4. Le câble 43 est engagé sur la poulie 41 et est attaché par son autre extrémité à un contrepoids 45.

Une bande abrasive fermée 5 est montée et tendue sur quatre galets 51, 52, 53 et 54, dont les axes de rotation sont parallèles à l'axe du pneumatique 2 à rectifier. Le galet 54 est motorisé de façon à mettre la bande abrasive 5 en mouvement dans le sens indiqué sur la flèche 55.

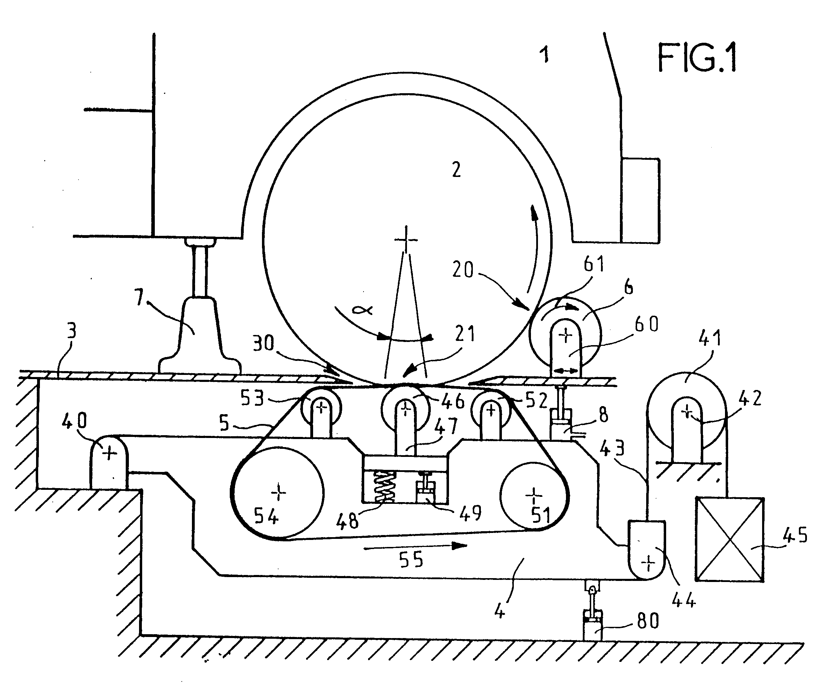

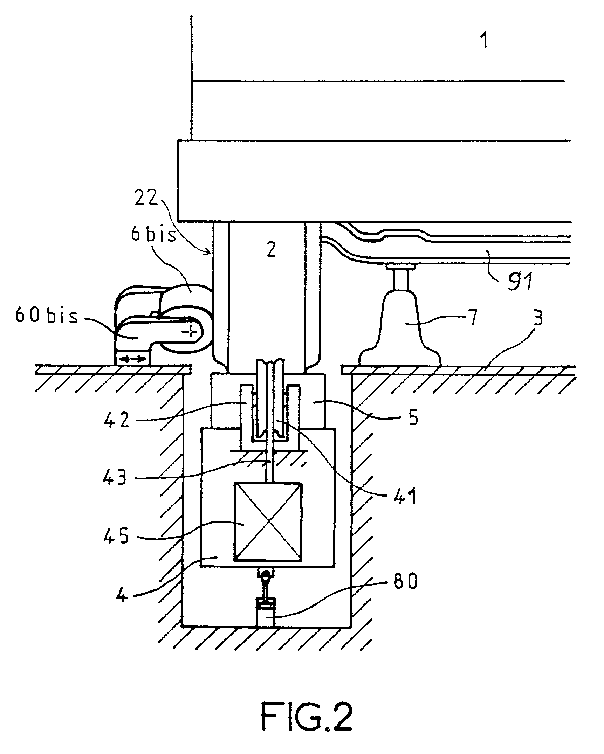

A la figure 1, le pneumatique 2 lui-même est entraîné en rotation par un rouleau de motorisation 6 dont l'axe est parallèle à l'axe du pneumatique 2. Le rouleau de motorisation 6 est monté sur un support 60 monté coulissant sur le sol 3, de façon à pouvoir éloigner et rapprocher le rouleau de motorisation 6 du pneumatique 2. Un cric 7 permet de délester le pneumatique 2 de la totalité de la charge du véhicule qu'il reprend normalement. Celui-ci peut donc être implanté sous le châssis du véhicule, ou de préférence sous un organe du train concerné, par exemple sous l'essieu sur lequel le pneumatique 2 est monté. La position du cric 7 est schématique à la figure 1, pour que celle-ci montre tous les éléments principaux de l'invention, la position réaliste étant plutôt celle de la figure 2.

A la figure 2, on voit que la seconde variante diffère essentiellement par l'entraînement en rotation du pneumatique 2 : un galet 6bis dont l'axe de rotation est perpendiculaire à celui du pneumatique 2, est monté sur un support 60bis monté coulissant sur le sol 3 de l'atelier. Le galet 6bis est appliqué sur le flanc 22 du pneumatique 2 pour l'entraîner en rotation. On voit que le cric 7 agit sur l'essieu rigide 91 du véhicule. Pour le reste, la machine représentée à la figure 2 est tout à fait similaire à celle représentée à la figure 1. La suite de la description peut donc concerner indifféremment tous les aspects communs aux deux machines.

Le rouleau de motorisation 6 est motorisé dans le sens 61 qui provoquera un entraînement du pneumatique 2 en sens opposé au mouvement 55 de la bande abrasive 5. Au passage, on peut faire remarquer que, tout comme on utilise parfois le principe du fraisage en avalant, on peut aussi entraîner la bande abrasive et le pneumatique dans le même sens pourvu qu'il y ait bien entendu une différence de vitesse linéaire. Le rouleau de motorisation 6 est mis en appui contre le pneumatique 2 avec une pression de contact aussi faible que possible, juste suffisante pour entraîner le pneumatique 2 en rotation, y compris pendant que celui-ci est soumis à l'action de la bande abrasive 5 qui va développer sur le pneumatique 2 un effort tendant à renverser le sens de rotation de celui-ci. Le rouleau de motorisation 6 est mis en appui contre le pneumatique au point 20 écarté d'au moins 30° de la zone 21 du pneumatique 2 soumise à l'action de la bande abrasive 5.

On a constaté que le sens de la rectification de la bande de roulement (sens du déplacement de la bande abrasive 5 à la surface de la bande de roulement) pouvait parfois laisser une trace sous la forme d'une légère configuration en dents de scie. Pour l'éviter, il suffit de répartir la rectification sur les deux sens relatifs (inversion de tous les mouvements au milieu de l'opération de rectification). Si le pneumatique à rectifier présente une usure en dents de scie, on peut la faire disparaître ou l'atténuer en choisissant le sens adéquat pour l'opération de rectification.

Ces précautions (délestage du pneumatique, appui du pneumatique sur un seul rouleau 6, à distance suffisante de la zone de rectification) visent à permettre que l'opération de rectification du pneumatique 2 reproduise aussi fidèlement que possible tous les défauts de circularité de la bande de roulement ayant une harmonique inférieure à 2 environ. Ainsi, l'opération d'entretien proposée n'enlève qu'une couche vraiment minime de caoutchouc. Elle est cependant suffisante pour faire disparaître toutes les usures anormales, créant par exemple des facettes inclinées sur chaque pain de la sculpture. Ces formes d'usure anormale sont détectables par simple inspection visuelle des pneumatiques très tôt dans le processus d'usure, alors qu'elles n'ont encore provoqué qu'un approfondissement local de l'usure très faible. La plupart du temps, il s'avère suffisant de n'enlever qu'une épaisseur de l'ordre de 3/10 de mm dès l'apparition des symptômes d'usure anormale, pour maintenir le pneumatique dans une zone de fonctionnement où les phénomènes d'usure restent à leur vitesse minimale.

Le contrepoids 45 est réglé de façon à ce que la force d'appui de la bande abrasive 5 sur la bande de roulement du pneumatique soit très faible, de préférence inférieure à 20 dN, de façon à faire disparaître les facettes d'usure anormale, tout en respectant les défauts de circularité de la bande de roulement. De préférence, la face d'appui sur le pneumatique est appliquée à la bande abrasive 5 par un contre-galet 46 ayant le profil transversal du pneumatique à rectifier, et la largeur de la bande abrasive équivaut à la largeur de la bande de roulement. De préférence, le contre-galet 46 est monté sur un support 47 lié au bâti 4 par un ensemble ayant un ressort 48 et un amortisseur 49. En outre, un amortisseur 80 est disposé entre le bâti 4 et le sol (ou l'armature enveloppant la machine) pour amortir les mouvements du bâti 4. On dispose en réserve de tout un jeu de contre-galets 46 puisque un contre galet 46 correspond a un type de pneumatique, ou à quelques types de pneumatique. Les galets 52 et 53 peuvent également avoir une forme en diabolo, avec une légère réduction de leur diamètre en partie centrale.

Dans l'opération de rectification, le moyen de meulage, à savoir la bande abrasive 5 agit à tout instant sur un arc α très petit, correspondant sensiblement à la longueur d'un motif de sculpture élémentaire, dans le cas de sculptures constituées par des pains de caoutchoucs disposés circonférentiellement. En moyenne, c'est-à-dire en considérant un arc au moins égal à cet arc α, on enlève une épaisseur de caoutchouc constante. C'est-à-dire que contrairement aux opérations de rectification connues, dans lesquelles on peut enlever des épaisseurs très différentes selon la position circonférentielle considérée, on respecte la régularité circonférentielle de la profondeur de sculpture. Afin d'améliorer encore la régularité de l'opération de rectification, on peut rendre le contre-galet 46 flottant transversalement (c'est-à-dire dans le sens de son axe de rotation).

Une opération de rectification impose de faire parcourir au pneumatique plusieurs tours pendant qu'il est soumis à l'action de la bande abrasive 5. Il est bien entendu possible d'automatiser totalement l'intervention de la machine.

Un dispositif optique (non représenté) vise le flanc du pneumatique sur lequel on a tracé un trait blanc à la craie grasse, en veillant à orienter ce trait dans une direction approximativement radiale. Au départ, un vérin pneumatique 8 repousse le bâti 4 vers le bas jusqu'à une butée : il n'y a donc pas de contact entre le pneumatique 2 et la bande abrasive 5 : on laisse un jeu faible, de l'ordre de 1 ou 2 mm. Lorsque le dispositif optique repère le passage du trait, on branche l'alimentation du vérin 8 à l'atmosphère, de sorte que, sous l'action du contrepoids 45, la bande abrasive entre en contact avec la bande de roulement. Le pneumatique est entraîné par le rouleau de motorisation 6 ou 6bis à une vitesse de l'ordre de 10 tours minute. Après un nombre préétabli de tours de rotation du pneumatique, par exemple après 10 tours, le dispositif optique commande le branchement de la source d'air comprimé au vérin 8 pour dégager la bande abrasive.

A ce stade, une simple inspection visuelle permet de décider si la rectification est suffisante (défauts totalement disparus) ou s'il convient d'effectuer une passe supplémentaire.

## Revendications

1. Procédé de rectification d'un pneumatique (2) monté sur une jante et gonflé à sa pression nominale, entraîné en rotation, et sur lequel agit un moyen de meulage (5), caractérisé en ce que l'on applique le moyen de meulage (5) sur la bande de roulement avec une pression faible et constante pendant plusieurs tours du pneumatique, et en ce que l'on enlève par abrasion une épaisseur de caoutchouc constante en moyenne circonférentiellement.

2. Procédé selon la revendication 1, caractérisé en ce qu'il est appliqué sur un pneumatique ayant été en service sur un véhicule, et retiré pour cause d'usures trop irrégulières.

3. Procédé selon la revendication 2 caractérisé en ce que l'on enlève au total de 5/10 de mm à 3 mm d'épaisseur radiale de caoutchouc, en plusieurs tours du pneumatique.

4. Procédé selon la revendication 1, caractérisé en ce qu'il est appliqué sur un pneumatique neuf, et en ce que l'on enlève au total de 2/10 de mm à 4/10 de mm de l'épaisseur radiale de caoutchouc, en plusieurs tours de pneumatique.

5. Procédé selon l'une des revendications 1 à 4, caractérisé en ce qu'il est appliqué à un pneumatique monté sur véhicule.

6. Machine de rectification d'un pneumatique (2) monté sur un véhicule (1) et gonflé à sa pression nominale destinée à être utilisée avec un cric (7) permettant de délester le pneumatique de la totalité de la charge du véhicule qu'il reprend normalement, comportant des moyens permettant d'entraîner le pneumatique en rotation, caractérisée en ce que la machine comporte une bande abrasive (5) susceptible d'être mise en mouvement, et des moyens permettant d'appliquer la bande abrasive sur le pneumatique (2) avec une force d'appui faible et rigoureusement constante pendant toute la rotation du pneumatique.

7. Machine selon la revendication 6, caractérisée en ce que les moyens destinés à entraîner le pneumatique (2) en rotation sont constitués par un rouleau de motorisation (6 ou 6bis) le rouleau (6 ou 6bis) étant motorisé en rotation et mis en appui contre le pneumatique (2) de telle sorte qu'une pression de contact faible, juste suffisante à l'entraînement soit engendrée, le rouleau (6 ou 6bis) étant mis en appui contre le pneumatique (2) à un endroit écarté d'au moins 30° de la zone du pneumatique soumis à l'action de la bande abrasive.

8. Machine selon l'une des revendications 6 ou 7, caractérisée en ce que la bande abrasive (5) est une bande abrasive fermée tendue sur au moins deux galets dont l'axe de rotation est parallèle à l'axe du pneumatique à rectifier, l'un des galets étant motorisé, la bande abrasive étant mise en mouvement en sens opposé au mouvement du pneumatique lorsqu'il est entraîné en rotation.

9. Machine selon l'une des revendications 6 à 8, caractérisée en ce qu'elle reçoit le pneumatique (2) sur le dessus de la bande abrasive (5) et en ce que les moyens permettant d'appliquer la bande abrasive avec une force d'appui faible et constante comportent essentiellement un bâti (4) supportant la bande abrasive (5), articulé autour d'un axe (40) suspendu à l'autre extrêmité à un contrepoids (45) compensant le poids du bâti (4) et des éléments qu'il supporte, et imprimant à ladite bande abrasive (5) la force faible et constante d'appui sur le pneumatique (2), orientée verticalement et dirigée vers le haut.

10. Machine selon l'une des revendications 6 à 9, caractérisée en ce que ladite face d'appui sur le pneumatique (2) est appliquée à la bande abrasive (5) par un contre-galet (46) ayant le profil transversal du pneumatique (2) à rectifier.

11. Machine selon la revendication 10, caractérisée en ce que le contre-galet (46) est monté sur un support (47) lié au bâti (4) par un ensemble ressort (48) et amortisseur (49).

12. Machine selon l'une des revendications 10 ou 11, caractérisée en ce que le contre-galet (46) est flottant transversalement.

13. Machine selon l'une des revendications 9 à 12, caractérisée en ce que les mouvements du bâti 4 sont amortis par un amortisseur (49).

## Patentansprüche

1. Verfahren zum Schleifen eines auf einer Felge montierten und auf seinen Nenndruck aufgepumpten drehangetriebenen Reifens (2), auf den eine Schleifeinrichtung (5) wirkt,
dadurch **gekennzeichnet**, daß die Schleifeinrichtung (5) mit geringem und konstantem Druck während mehrerer Umdrehungen des Reifens auf die Lauffläche gedrückt wird, und daß durch Abtragung eine Gummischicht von über den Umfang im Mittel konstanter Dicke entfernt wird.

2. Verfahren nach Anspruch 1,
dadurch gekennzeichnet, daß es auf einen Reifen angewandt wird, der an einem Fahrzeug benutzt worden ist und aufgrund von zu unregelmmäßiger Abnutzung aus dem Verkehr gezogen worden ist.

3. Verfahren nach Anspruch 2,
dadurch gekennzeichnet, daß bei mehreren Umdrehungen des Reifens Gummi mit insgesamt 5/10 mm bis 3 mm radialer Dicke entfernt wird.

4. Verfahren nach Anspruch 1,
dadurch gekennzeichnet, daß es auf einen neuen Reifen angewandt wird, und daß bei mehreren Umdrehungen des Reifens Gummi mit insgesamt 2/10 mm bis 4/10 mm radialer Dicke entfernt wird.

5. Verfahren nach einem der Ansprüche 1 bis 4,
dadurch gekennzeichnet, daß es auf einen am Fahrzeug montierten Reifen angewandt wird.

6. Maschine zum Schleifen eines an einem Fahrzeug (1) montierten, auf seinen Nenndruck aufgepumpten Reifens (2), die zur Verwendung mit einem Wagenheber (7) vorgesehen ist, der es ermöglicht, den Reifen von der gesamten Last des Fahrzeugs zu entlasten, die er normalerweise trägt, mit Einrichtungen zum Drehantreiben des Reifens, gekennzeichnet durch ein bewegliches Schleifband (5) und Einrichtungen, mit denen das Schleifband mit einer geringen und streng konstanten Andruckkraft während der gesamten Umdrehung des Reifens an den Reifen (2) angedrückt werden kann.

7. Maschine nach Abspruch 6, dadurch gekennzeichnet, daß die Einrichtungen zum Drehantreiben des Reifens (2) aus einer Antriebsrolle (6 oder 6bis) bestehen, wobei die Rolle 6 oder 6bis drehmotorisiert ist und derart gegen den Reifen (2) gedrückt wird, daß ein geringer, zur Mitnahme gerade ausreichender Kontaktdruck erzeugt wird, wobei die Rolle (6 oder 6bis) an einer Stelle gegen den Reifen (2) gedrückt wird, die um wenigstens 30° gegen den der Wirkung des Schleifbands unterliegenden Bereich des Reifens versetzt ist.

8. Maschine nach einem der Ansprüche 6 oder 7,
dadurch gekennzeichnet, daß das Schleifband (5) ein endloses Schleifband ist, daß auf wenigstens zwei Walzen gespannt ist, deren Drehachse parallel zur Achse des zu schleifenden Reifens ist, wobei eine der Walzen motorisiert ist und das Schleifband, wenn es drehangetrieben wird, entgegengesetzt zur Bewegungsrichtung des Reifens in Bewegung versetzt wird.

9. Maschine nach einem der Ansprüche 6 bis 8,
dadurch gekennzeichnet, daß sie den Reifen (2) an der Oberseite des Schleifbands (5) aufnimmt, und daß die Einrichtungen zum Andrücken des Schleifbands mit einer geringen und konstanten Andruckkraft im wesentlichen ein Gestell (4) umfassen, das das Schleifband (5) trägt, um eine Achse (40) schwenkbar ist, am anderen Ende an einem Gegengewicht (45) aufgehängt ist, das das Gewicht des Gestells (4) und der von ihm getragenen Elemente kompensiert, und auf das Schleifband (5) die geringe und konstante, vertikal orientierte und nach oben gerichtete Andruckkraft an dem Reifen (2) erzeugt.

10. Maschine nach einem der Ansprüche 6 bis 9,
dadurch gekennzeichnet, daß Andruckfläche zum Drücken gegen den Reifen (2) an das Schleifband (5) durch eine Gegenwalze (46) angesetzt wird, die das Querprofil des zu schleifenden Reifens (2) hat.

11. Maschine nach Anspruch 10,
dadurch gekennzeichnet, daß die Gegenwalze an einem Träger (47) montiert ist, der mit dem Gestell (4) durch eine Anordnung aus Feder (48) und Stoßdämpfer (49) verbunden ist.

12. Maschine nach einem der Ansprüche 10 oder 11,
dadurch gekennzeichnet, daß die Gegenwalze (46) querbeweglich ist.

13. Maschine nach einem der Ansprüche 9 bis 12, dadurch gekennzeichnet, daß die Bewegungen des Gestells (4) durch einen Stoßdämpfer (49) gedämpft sind.

## Claims

1. A method of grinding a tire (2) mounted on a rim and inflated to its rated pressure, driven in rotation, on which a grinding means (5) acts, characterized by the fact that the grinding means (5) is applied to the tread with a slight constant pressure during several rotations of the tire and by the fact that a circumferentially constant on the average thickness of rubber is removed by abrasion.

2. A method according to Claim 1, characterized by the fact that it is applied to a tire which has been in use on a vehicle and removed because of excessively irregular wear.

3. A method according to Claim 2, characterized by the fact that a total of 5/10 mm to 3 mm in radial thickness is removed from the tire upon several revolutions of the tire.

4. A method according to Claim 1, characterized by the fact that it is applied to a new tire, and by the fact that a total of 2/10 of a mm to 4/10 mm of the radial thickness of the tire is removed in several revolutions of the tire.

5. A method according to any of Claims 1 to 4, characterized by the fact that it is applied to a tire mounted on a vehicle.

6. A machine for grinding a tire (2) which is mounted on a vehicle (1) and inflated to its rated pressure, intended to be used with a jack (7) which makes it possible to relieve the tire of the entire load of the vehicle which it normally bears, comprising means making it possible to drive the tire in rotation, characterized by the fact that the machine comprises an abrasive belt (5) which is adapted to be placed in movement, means making it possible to apply the abrasive belt against the tire (2) with a slight, and strictly constant during the whole rotation of the tire, pressing force.

7. A machine according to Claim 6, characterized by the fact that the means intended to drive the tire (2) in rotation consists of a drive roller (6 or 6 bis) driven in rotation and placed against the tire (2) in such a manner that a slight contact pressure just sufficient for the driving is produced, the roller (6 or 6 bis) being placed against the tire (2) at a space at least 30° away from the region of the tire subjected to the action of the abrasive belt.

8. A machine according to either of Claims 6 and 7, characterized by the fact that the abrasive belt (5) is a closed abrasive belt stretched at least over 2 rollers the axis of rotation of which is parallel to the axis of the tire to be ground, one of the rollers being driven, the abrasive belt being placed in movement in direction opposite the movement of the tire when it is driven in rotation.

9. A machine according to any of Claims 6 to 8, characterized by the fact that it receives the tire (2) on the top of the abrasive belt (5) and by the fact that the means making it possible to apply the abrasive belt with a slight and constant pressing force is comprised essentially of a frame (4) supporting the abrasive belt (5) and articulated around a shaft (40) suspended at the other end to a counterweight (45) compensating for the weight of the frame (4) and the elements which it bears, and imparting to the abrasive belt (5) the slight constant pressing force against the tire (2) oriented vertically and directed upward.

10. A machine according to any of Claims 7 to 9, characterized by the fact that the said resting face on the tire (2) is applied to the abrasive belt (5) by a counter-roller (46) having the transverse profile of the tire (2) to be ground.

11. A machine according to Claim 10, characterized by the fact that the counter-roller (46) is mounted on a support (47) connected to the frame (4) by an assembly consisting of spring (48) and dashpot (49).

12. A machine according to either of Claims 10 and 11, characterized by the fact that the counter roller (46) floats transversely.

13. A machine according to any of Claims 9 to 12, characterized by the fact that the movements of the frame (4) are damped by a dashpot (49).
